# EUROPEAN PATENT SPECIFICATION

(11) **EP 2 045 990 B1**
(45) Date of publication and mention of the grant of the patent: **17.07.2013**
(21) Application number: 07019472.5
(22) Date of filing: 04.10.2007
(51) Int. Cl.: H04W 8/08, H04W 80/04

(54) **Access service network for use in a mobile IP based communication system**
Zugangsdienstnetz zur Verwendung in einem mobilen IP-basierten Kommunikationssystem
Réseau de service d'accès à utiliser dans un système de communication basé sur IP mobile

(43) Date of publication of application: 08.04.2009
(73) Proprietor: Nokia Siemens Networks Oy, 02610 Espoo (FI)
(72) Inventor: Wisenöcker, Richard, 1140 Wien (AT)
(74) Representative: Bruglachner, Thomas E.

(56) References cited:
- WO-A-02/03718
- US-A1- 2007 060 097

## Description

### 1. Technical Field of the Invention

The invention relates to an access service network for use in a mobile IP based communication system providing access for at least one mobile user equipment device to the internet. Moreover, the invention proposes a method for routing mobile IP based data packets according to the preamble of claim 9.

### 2. Background of the Invention

The Mobile Internet Protocol (Mobile IP or MIP) according to version 4 (MIPv4) as specified in RFC3344 or according to version 6 (MIPv6) supports transparent access to the internet for the roaming user. The transparency above the IP layer includes the maintenance of active TCP connections and UDP port bindings upon roaming. The latest version MIPv6 is defined by RFC3775 and RFC3776, ensures permanent IP connectivity, allows roaming between different layer two technologies such as WLAN, WiMAX, GSRP, roaming between different networks or sub-networks, assures application continuity upon roaming and provides static IP addresses for mobile nodes such that e.g. mobile devices may act as servers. The mobile nodes or mobile user equipment devices are provided with a static IP address named Home Address (HoA) out of the mobile nodes' home network. The Mobile Node (MN) can change its point of attachment while still being reachable via the home address. While the mobile node is visiting a foreign network, it is provided with a Care-of Address (CoA) which is the physical IP address during the visit.

The home network of the mobile node comprises a Home Agent (HA) which is a router in the home network which represents the mobile node while it is not attached with the home network. A target node, with which a mobile node is communicating, is usually referred to as a correspondent node (CN) which may be a mobile or stationary node.

Upon connection to the foreign network, the mobile node is provided with a care-of address and sends a binding update to the home agent. The binding update may be secured by IPsec ESP in transport mode. The home agent uses a proxy neighbour discovery to represent the mobile node in the home network.
Every traffic destinated to the mobile node will be encapsulated in an IPv6-in-IPv6 tunnel and sent to the care-of address of the mobile network by the Home Agent (HA). In a bidirectional tunnel mode, the traffic from the mobile node uses the same tunnel in reverse mode. In order to avoid suboptimal routing, MIPv6 allows a route optimization,
wherein the mobile node may send traffic to the correspondent node, using his care-of address as a source address.

The packet contains a home address as a destination option and the correspondent node replaces the source address with the home address before passing the packet to upper layer protocols. The Correspondent Node (CN) sends traffic to the mobile node with a care-of address as a destination address in a packet containing a special routing header with the home address as a second hop. The mobile node removes a routing header and forwards the packet to the next hop specified by the routing header. The upper layer protocol is only aware of the home address. If route optimization is applied, the binding update must be secured.

Mobile IP based access networks in the sense of the invention may e.g. be of WiMAX or 3GPP LTE type.

In the case of WiMAX, a so called "local breakout" is known, where the connection to the public IP network is done at the visiting network instead of the home network- For exceptional cases, WiMAX supports home-routed traffic where the traffic always goes back to the home network (home agent). However, a terminal cannot specifically force local breakout or could even identify if a current connection routes traffic back to the home network or uses direct connections to the public IP network or internet at the visiting network.

For example in the case of emergency calls, this may be embarrassing, since it is preferred to handle emergency calls by the local operator at the visited network without involvement of any home operator, since the home operator may be located in a different country.

WO 02/03718 A2 describes telephony services in mobile IP networks. An emergency call may be supported and routed to a Public Safety Answering Point (PAP) in an IP based packet Switched wireless communication network.

US 2007/0060097 A1 describes techniques to support emergency voice-over-Internet Protocol (VoIP) calls. A User Equipment (UE) may communicate with a visited network to send a request to establish an emergency VoIP call. The UE may interact with a local server instructed by the visited network to obtain a first position estimate for the UE. The UE may perform call set up via the visited network to establish the emergency VoIP call with a PSAP, which may be selected based on the first position estimate.

UMTS networks according to 3GPP standards use the functionality of the so called "APN" allowing a mobile user equipment to select specific connections for specific purposes. Mobile IP based networks such as WiMAX and specifically IEEE802.16e being used as a radio link do not provide such or a similar possibility. The reason is that the services requested by the user equipment device have to be controlled by an Authentication, Authorization and Accounting server (AAA) storing and forwarding subscription data of the user equipment device. However, e.g. in the case of emergency calls, a direct connection to the public network without involvement of the home network or home agent would be highly desirable.

### 3. Summary of the Invention

One object of the invention is to provide an access service network for use in a mobile IP based communication system with the possibility of a direct access to public networks being controlled by a router in the access network.

The invention starts from an access service network for use in a mobile IP based communication system providing wireless access to a public network, in particular to the internet, for at least one mobile user equipment device being located in a range of the local access network. The access service network comprises data tunnelling means for establishing a tunnelled communication connection for traffic from the mobile user equipment device to a home agent device, wherein the home agent device is configured to store subscription information relating to the user equipment device. In particular, the tunnelling connection may consist in a IP-in-IP nesting wherein an inner IP data packet including its header is contained in the data part of an outer IP data packet.

In order to allow a direct routing, a first aspect of the invention proposes that the access service network further comprises an access router comprising a data storage means for storing a list of special local correspondent nodes providing special services. The access router may in particular be configured to extract identification data of the special local correspondent node from the received data and to directly forward the received data to the special local correspondent node if the identification data of the correspondent node matches an entry in the list of special local correspondent nodes. The special local correspondent nodes may e.g. comprise a correspondent node for providing a special connection for emergency calls, e.g. a telephone/voice over IP connection to a Public Safety Answering Point (PSAP).

Since the Invention is applicable to a variety of network types, the above and below description uses terms referring to a specific technology in a wide sense. In particular, the expressions mobile node (MN) and user equipment device are used both meaning mobile communication devices such as mobile phones, laptop computers, PDAs or the like.

The proposed solution makes use of the capability of route optimization which is available for MIPv4 and MIPv6. One of the characterizing features of the invention is that the access router is installed between the data tunnelling means which usually implements the data path function (DPF) establishing the layer two tunnel to the base station and the Foreign Agent (FA) in the case of MIPv4 and the access router in the case of MIPv6 respectively. The access router is provided with a direct connection to the special local correspondent node, e. g. the PSAP. The emergency service (ES) will be configures such that the connected PSAP can be used.

In the case of MIPv4, the tunnelled connection may be generated between the Foreign Agent (FA) and the Home Agent (HA), wherein an additional tunnelled connection e.g. in the form of a Data Path Function (DPF) may be provided between a base station (BS) providing a wireless link to the user equipment device (MS) and the FA. In the case of MIPv6, the tunnelled connection for the regular traffic may be generated between the user equipment device (MS) and the Home Agent (HA), wherein the Access Router (AR) of the access network only forwards the tunnelled data packets. In the case of MIPv6, the tunnel generated by the MS may be nested in an
wherein an additional tunnel between a base station (BS) providing a wireless link to the user equipment device (MS) and the AR.

Moreover, it is proposed that the access service network comprises means for translating address information data from a local address range used in the local access network to an IP address used in the public IP network and vice versa. This solves any problems relating to Virtual Private Networks (VPNs), where private address ranges are used. E.g. a Network Address Translator (NAT) or Network Address Port Translator (NAPT) could be installed between the special local correspondent node (PASP) and the tunnelling means .

The NAT or NAPT should also be used in the case of MIPv4, since otherwise packet sent from the PSAP to the user equipment device MS could be routed via the home agent, since the home address is present in the packet header.

For access control, the NAT or NAPT may be extended by a firewall which may be dynamically configured with the help of the local information of the access service network (ASN). In order to allow direct routing, the access service network may comprise means for replacing an IP address of the Home Agent device (HA) contained in the header of the received data packet with an IP address of the special local correspondent node (CN) extracted from the received data.

A combined routing of all IP connections relating to the communication connection between the user equipment device and the special local correspondent node may be achieved if the access service network further comprises a Application Layer Gateway for corresponding Sessions like a Session Interface Protocol Application Layer Gateway Unit (SIP ALG) in case of SIP for configuring the routing of the respective IP connections. The signalling (SIP) and voice bearer (RTP) could be handled by different IP addresses and the SIP ALG can also be required to control the NAT or NAPT.

The access router or the access network may provide the user equipment device registering at the access network with an address of at least one special local correspondent node, e.g. the PSAP. The address and the list of special local correspondent nodes may be user specific and be provided and controlled by a subscriber profile store like an authentication, authorization and accounting server comprised in a mobile IP based communication system having an access service network according to the invention. If the access network is based on SAE, the subscriber profile store is called HSS.

A further aspect of the invention relates to a method for routing mobile IP based data packets in a communication system providing wireless access to a public network, in particular to the internet, for at least one mobile user equipment device being located in the range of the access service network. The method comprises establishing a tunnelled communication connection to a home agent device for accessing regular services, wherein the home agent device is configured to store subscription information relating to the user equipment device.

The invention proposes that the method comprises the steps of storing a list of special local correspondent nodes in data storage means, extracting the special local correspondent node from received data, and directly forwarding the received data to the special local correspondent node if the extracted correspondent node matches an entry in the list of special local correspondent nodes.

The essential features of the invention and the advantages thereof will become more apparent from the following description of an embodiment of the invention. The description and the embodiment illustrated in the attached figure combine multiple characterizing features in a particular way. The skilled person will routinely find other suitable combinations of the characterizing features for specific applications without departing from the scope of the invention as set out in the attached claims.

### 4. Brief Description of the Drawing

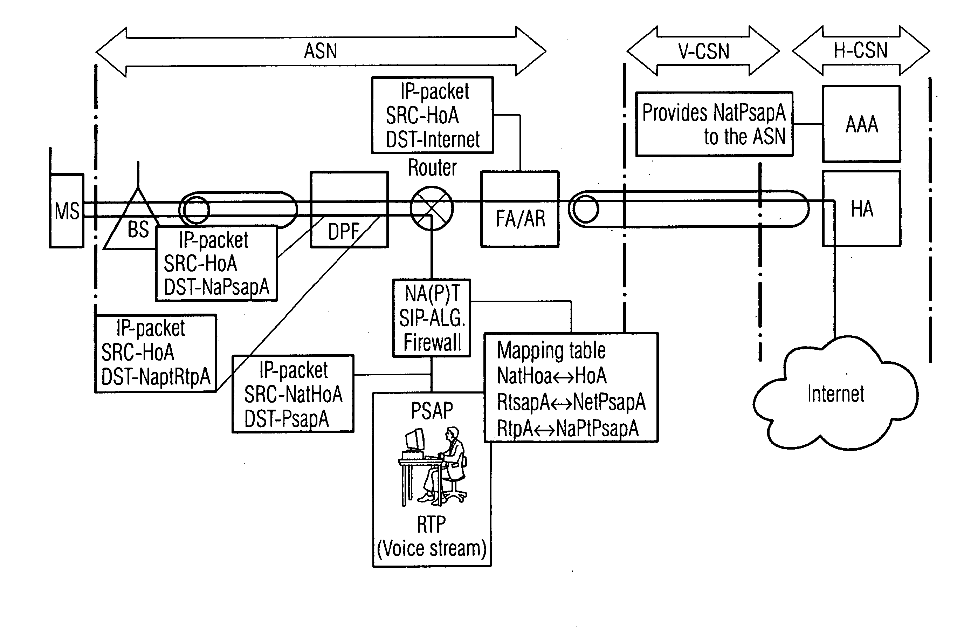

Fig. 1 shows a network system comprising an Access Network System according to the invention.

### 5. Detailed Description of the Embodiment

Figure 1 shows a Mobile IP based communication system combining several (sub)networks which may be heterogeneous. In the illustrated situation, a mobile user equipment device or mobile station MS is registered at an Access Service Network (ASN) remote from a Home Core Service Network (H-CSN) of the mobile user equipment device MS. The mobile user equipment device MS is provided with a fixed IP address comprised in an address range of the H-CSN and the H-CSN includes a home agent device HA forwarding incoming IP packets to the mobile user equipment device if the latter is bound at a remote network.

The access service network provides wireless access to the internet for the user equipment device MS by using a Base Station (BS). The access service network ASN of the illustrated embodiment is a WiMAX based network with layer 2 based mobility support. However, the regular traffic is routed via the home agent of the MS in order to allow the latter to control the subscription and accounting. The access service network comprising data tunnelling means DPF implementing a Data Path Function (DPF) for establishing a tunnelled communication connection between the Base station BS and the Foreign Agent FA, weherein the FA is configured to generate a further tunnelled data connection for forwarding regular traffic to the home agent device HA. The home agent device HA or another device in the H-CSN is configured to store subscription information relating to the user equipment device MS.

Moreover, the access service network further comprises an access router comprising a data storage means (not illustrated) for storing a list of special local correspondent nodes CN providing special services such as emergency services.

The access router can be implemented in one device with the tunnelling means DPF and the Foreign Agent FA (in the case of MIPv4) or the Access Router AR (in the case of MIPv6) and is configured to extract identification data of the target node from data packets received from the MS.

The access router is further configured to directly forward the received data to the special local correspondent node (the PSAP) if the identification data of the target node matches an entry in the list of special local correspondent nodes.

The list of special local correspondent nodes stored in memory unit of the router comprises at least a correspondent node for providing a special connection for emergency calls.

Moreover, the network system comprising the access service network according to the invention comprises an Authentication, Authorization and Accounting (AAA) server usually being located in the home core service network (H-CSN) managing the subscription, authorization and accounting data relating to the mobile user equipment device MS under consideration.

Upon registration of the mobile user equipment device MS at the access network (ASN), the AAA provides a list of internal addresses of specific local correspondent nodes providing special services to the access network (ASN). The access router comprises a storage means for storing the list. The list of special local correspondent nodes comprises in particular a correspondent node for providing a special connection for emergency calls, in particular voice stream connections to a Public Safety Answering Point (PSAP). Other possible special local correspondent nodes may comprise e.g. hotel search services, breakdown services, or the like.

Upon reception of a data packet from the user equipment device MS, the access router extracts identification data, i.e. an IP address of the target corresponding node CN from the packet header and compares the extracted identification data with the list of special local correspondent nodes. If the extracted identification data of the target correspondent node matches an entry in the previously stored list of special local correspondent nodes received from the AAA, the access router directly forwards the received data to the special local correspondent node.

In the embodiment illustrated in Fig. 1, the special local correspondent node corresponds to a Public Safety Answering Point (PSAP) providing a bidirectional voice stream data connections for VOIP calls in the case of emergency.

The solution according to the invention uses the capability of route optimization where packets need not to be sent back to the Home Agent device (HA) if the destination address has a network part of the local network. In this case, packets are forwarded locally at the foreign agent (in the case of MIPv4) or at the access router (in the case of MIPv6). The user equipment device MS will communicate as usual, i.e. in the case of MIPv6 with its Care-of Address (CoA) and in the case of MIPv4 with its Home Address (HoA).

In order to solve problems of Virtual Private Networks (VPN), where private address ranges are used, a Network Address Translator (NAT) or a Network Address Port Translator (NAPT) is installed between the special local correspondent node PSAP and the access router or the tunnelling means DPF. In the case of MIPv4, the NAT or NAPT is used in order to avoid data packets from the special local correspondent node PSAP to be sent to the Home Agent device (HA) erroneously since the home address would be present in the packet header. For access control, the NAT and/or NAPT is extended by a firewall which is dynamically configured with the help of local information of the access network (ASN).

In order to coordinate handling of different bearers, such as a singling SIP and a voice bearer RTP, the network system is provided with an Application Layer Gateway like a SIP ALG which also controls the NAT or NAPT.

In order to improve the handling for private or local addresses of the special local correspondent node PSAP, i.e. the IP address of the PSAP used within the local access network in the case of VPNs, the subscriber profile base like an Authentication, Authorization and Accounting server (AAA) provides a native address of the special local correspondent node, which is referred to as PSAP-NAT and represents the PSAP for the user equipment device MS within the access network, which is a WiMAX in the present case. The NAT gateway comprising the NAT or NAPT, the SIP ALG and the firewall, translates this PSAP-NAT address to the real PSAP address of the public network comprising the PSAP. The real address could e.g. be a telephone number or an IP address. The same address is used for any additional bearer or data stream, like an audio stream related to the emergency service.

The firewall is controlled together with the NAT by the data available within the Access Service Network (ASN) in order to restrict the access for each subscriber to only allow the specific services provided by the special local correspondent nodes, wherein the specific services do not have to be controlled by the AAA. In the simplest case, the only specific service is the emergency service/the emergency session.

The above described communication system implements a method for routing mobile IP based data packets in a communication system providing wireless access to a public network, in particular to the internet, for at least one mobile user equipment device being located in the range of the access service network. For regular traffic, the method provides a tunnel communication system to a Home Agent device (HA),
wherein the home agent device is configured to store and manage subscription information relating to the user equipment device.

According to the invention, a specific access router or configuration of an existing router to distinguishes between regular traffic and traffic relating to particular local services being provided by special local correspondent nodes. If the destination address contained in a data packet received from the user equipment device MS corresponds to the address of a special local correspondent node in the above sense, the router directly forwards the data to the special local correspondent node, which may e.g. be a Public Safety Answering Point (PSAP).

As a consequence, the invention allows for a direct routing of emergency calls to a local PSAP, wherein the direct routing is triggered by network devices such as the access router and is controlled by core network entities in the home CSN such as the AAA.

## Claims

1. Access Service Network (ASN) for use in a Mobile IP , MIP, based communication system providing access to a public network, in particular wireless access and/or access to the internet, for at least one mobile user equipment device (MS) being located in the range of the access service network (ASN) of a local operator,
the access service network (ASN) comprising means (AR/FA) for establishing a tunnelled communication connection routing regular traffic from the user equipment device (MS) to a home agent device (HA) of a home operator, wherein the home agent device (HA) is configured to store Mobile IP related subscription information relating to the user equipment device (MS), **characterized in that** the access service network (ASN) further comprises:
- an access router comprising a data storage means for storing a list of special local correspondent nodes providing special services,
- said access router being configured to extract identification data of a target node from a received data, and
- wherein the access router is provided with a direct connection to a special local correspondent node and is further configured to directly forward the received data to the special local correspondent node if the extracted identification data of the target node matches an entry in the list of special local correspondent nodes, without any need for sending packets back to the home agent device (HA).

2. Access Service Network according to claim 1, **characterized in that** said list of special local correspondent nodes comprises at least a correspondent node (PSAP) for providing a special connection for emergency calls.

3. Access Service Network according to claim 2, **characterized by** further comprising means (NAT, NAPT) for translating address information data from a local address range used in the local access network to an IP address and vice versa.

4. Access Service Network according to claim 3, **characterized by** further comprising means (NAT, NAPT) for replacing an IP address of the home agent device (HA) contained in an header of the received data packet with an IP address of the special local correspondent node extracted from the received data.

5. Access Service Network according to one of the preceding claims, **characterized by** further comprising an Application Layer Gateway Unit (SIP ALG) for configuring the routing of all IP connections relating to the communication connection between the user equipment device (MS) and the special local correspondent node.

6. Access Service Network according to one of the preceding claims, **characterized in that** said access router (AR) is configured to provide the user equipment device (MS) with an address of at least one special local correspondent node upon registration at the access service network.

7. Mobile IP based communication system comprising an access service network (ASN) according to one of the preceding claims, **characterized by** further comprising an subscriber profile base (AAA) being configured to provide the access router (AR) with the list of list of special local correspondent nodes.

8. Access router (AR) for use in a mobile IP based communication system according to claim 7.

9. Method for routing mobile IP based data packets in a communication system providing access to a public network, in particular wireless access and/or access to the internet, for at least one mobile user equipment device (MS) being located in the range of the access service network (ASN) of a local operator, wherein a tunnelled communication connection for routing regular traffic to a home agent device (HA) of a home operator is established, wherein the home agent device (HA) is configured to store subscription information relating to the user equipment device (MS), **characterized by** comprising the steps of:
- storing a list of special local correspondent nodes providing special services in data storage means of a local access router of the local access network,
- extracting the special local correspondent node from a data received from the user equipment device (MS), and
- directly forwarding the received data to the special local correspondent node via a direct connection if the extracted correspondent node matches an entry in the list of special local correspondent nodes, without any need for sending packets back to the home agent device (HA).

## Patentansprüche

1. Zugriffsdienstnetz (Access Service Network, ASN) zur Verwendung in einem Kommunikationssystem auf Basis von Mobile-IP, MIP, welches für mindestens eine mobile Benutzergeräteeinheit (MS), welche im Bereich des Zugriffsdienstnetzes (ASN) eines lokalen Operators angeordnet ist, Zugriff auf ein öffentliches Netz, insbesondere drahtlosen Zugriff und/oder Zugriff auf das Internet bereitstellt,
wobei das Zugriffsdienstnetz (ASN) Mittel (AR/FA) zum Einrichten einer getunnelten Kommunikationsverbindung aufweist, welche regulären Datenverkehr von der Benutzergeräteeinheit (MS) zu einer Home-Agent-Einheit (HA) eines Netzbetreibers leitet, wobei die Home-Agent-Einheit (HA) dafür konfiguriert ist, auf Mobile-IP bezogene Anmeldeinformationen zu speichern, welche die Benutzergeräteeinheit (MS) betreffen, **dadurch gekennzeichnet, dass** das Zugriffsdienstnetz (ASN) ferner das Folgende aufweist:
- einen Zugriffs-Router, welcher ein Datenspeicherungsmittel zum Speichern einer Liste spezieller lokaler Korrespondentenknoten aufweist, welche spezielle Dienste bereitstellen,
- wobei der Zugriffs-Router dafür konfiguriert ist, aus empfangenen Daten Identifikationsdaten eines Zielknotens zu extrahieren, und
- wobei der Zugriffs-Router mit einer direkten Verbindung zu einem speziellen lokalen Korrespondentenknoten versehen ist und ferner dafür konfiguriert ist, die empfangenen Daten direkt zu dem speziellen lokalen Korrespondentenknoten weiterzuleiten, wenn die extrahierten Identifikationsdaten des Zielknotens mit einem Eintrag in der Liste spezieller lokaler Korrespondentenknoten übereinstimmen, ohne dass es erforderlich ist, Pakete zu der Home-Agent-Einheit (HA) zurückzusenden.

2. Zugriffsdienstnetz nach Anspruch 1, **dadurch gekennzeichnet, dass** die Liste spezieller lokaler Korrespondentenknoten mindestens einen Korrespondentenknoten (PSAP) zum Bereitstellen einer speziellen Verbindung für Notrufe aufweist.

3. Zugriffsdienstnetz nach Anspruch 2, **dadurch gekennzeichnet, dass** es ferner Mittel (NAT, NAPT) zum Übersetzen von Adressinformationsdaten aus einem lokalen Adressbereich, der in dem lokalen Zugriffsnetz verwendet wird, in eine IP-Adresse und umgekehrt aufweist.

4. Zugriffsdienstnetz nach Anspruch 3, **dadurch gekennzeichnet, dass** es ferner Mittel (NAT, NAPT) zum Ersetzen einer IP-Adresse der Home-Agent-Einheit (HA), die in einem Anfangsblock des empfangenen Datenpakets enthalten ist, mit einer IP-Adresse des speziellen lokalen Korrespondentenknotens aufweist, die aus den empfangenen Daten extrahiert wird.

5. Zugriffsdienstnetz nach einem der vorhergehenden Ansprüche, **dadurch gekennzeichnet, dass** es ferner eine Verarbeitungsschicht-Gateway-Einheit (Application Layer Gateway Unit, SIP ALG) zum Konfigurieren des Routings aller IP-Verbindungen in Bezug auf die Kommunikationsverbindung zwischen der Benutzergeräteeinheit (MS) und dem speziellen lokalen Korrespondentenknoten aufweist.

6. Zugriffsdienstnetz nach einem der vorhergehenden Ansprüche, **dadurch gekennzeichnet, dass** der Zugriffs-Router (AR) dafür konfiguriert ist, der Benutzergeräteeinheit (MS) nach der Registrierung an dem Zugriffsdienstnetz eine Adresse mindestens eines speziellen lokalen Korrespondentenknotens bereitzustellen.

7. Kommunikationssystem auf Mobile-IP-Basis, welches ein Zugriffsdienstnetz (ASN) nach einem der vorhergehenden Ansprüche aufweist, **dadurch gekennzeichnet, dass** es ferner eine Teilnehmerprofilbasis (AAA) aufweist, welche dafür konfiguriert ist, dem Zugriffs-Router (AR) die Liste spezieller lokaler Korrespondentenknoten bereitzustellen.

8. Zugriffs-Router (AR) zur Verwendung in einem Kommunikationssystem auf Mobile-IP-Basis nach Anspruch 7.

9. Verfahren zum Routing von Datenpaketen auf Mobile-IP-Basis in einem Kommunikationssystem, welches für mindestens eine mobile Benutzergeräteeinheit (MS), welche im Bereich des Zugriffsdienstnetzes (ASN) eines lokalen Operators angeordnet ist, Zugriff auf ein öffentliches Netz, insbesondere drahtlosen Zugriff und/oder Zugriff auf das Internet, bereitstellt, wobei eine getunnelte Kommunikationsverbindung zum Routing regulären Datenverkehrs zu einer Home-Agent-Einheit (HA) eines Netzbetreibers eingerichtet wird, wobei die Home-Agent-Einheit (HA) dafür konfiguriert ist, Anmeldeinformationen zu speichern, welche die Benutzergeräteeinheit (MS) betreffen, **dadurch gekennzeichnet, dass** es die folgenden Schritte aufweist:
- Speichern einer Liste spezieller lokaler Korrespondentenknoten, welche spezielle Dienste bereitstellen, in Datenspeicherungsmitteln eines lokalen Zugriffs-Routers des lokalen Zugriffsnetzes,
- Extrahieren des speziellen lokalen Korrespondentenknotens aus Daten, die von der Benutzergeräteeinheit (MS) empfangen werden, und
- direktes Weiterleiten der empfangenen Daten zu dem speziellen lokalen Korrespondentenknoten über eine direkte Verbindung, wenn der extrahierte Korrespondentenknoten mit einem Eintrag in der Liste spezieller lokaler Korrespondentenknoten übereinstimmt, ohne dass es erforderlich ist, Pakete zu der Home-Agent-Einheit (HA) zurückzusenden.

## Revendications

1. Un réseau de service d'accès (ASN) destiné à une utilisation dans un système de communication de type IP mobile, MIP, fournissant un accès à un réseau public, plus particulièrement un accès sans fil et/ou un accès à l'Internet, pour au moins un dispositif d'équipement utilisateur mobile (MS) qui est situé dans la portée du réseau de service d'accès (ASN) d'un opérateur local, le réseau de service d'accès (ASN) comprenant un moyen (AR/FA) d'établissement d'une connexion de communication en tunnel acheminant un trafic classique du dispositif d'équipement utilisateur (MS) vers un dispositif d'agent personnel (HA) de l'opérateur de rattachement, dans lequel le dispositif d'agent personnel (HA) est configuré de façon à conserver en mémoire des informations d'abonnement de type IP mobile relatives au dispositif d'équipement utilisateur (MS), **caractérisé en ce que** le réseau de service d'accès (ASN) comprend en outre :
- un routeur d'accès comprenant un moyen à mémoire de données destiné à conserver en mémoire une liste de noeuds correspondants locaux spéciaux fournissant des services spéciaux,
- ledit routeur d'accès étant configuré de façon à extraire des données d'identification d'un noeud cible à partir de données reçues, et
- dans lequel le routeur d'accès est équipé d'une connexion directe à un noeud correspondant local spécial et est configuré en outre de façon à transférer directement les données reçues au noeud correspondant local spécial si les données d'identification extraites du noeud cible correspondent à une entrée dans la liste de noeuds correspondants locaux spéciaux, sans besoin de renvoyer des paquets vers le dispositif d'agent personnel (HA).

2. Le réseau de service d'accès selon la revendication 1, **caractérisé en ce que** ladite liste de noeuds correspondants locaux spéciaux comprend au moins un noeud correspondant (PSAP) destiné à fournir une connexion spéciale pour des appels d'urgence.

3. Le réseau de service d'accès selon la revendication 2, **caractérisé en ce qu'**il comprend en outre un moyen (NAT, NAPT) de conversion de données d'informations d'adresses d'une plage d'adresses locales utilisées dans le réseau d'accès local vers une adresse IP et vice versa.

4. Le réseau de service d'accès selon la revendication 3, **caractérisé en ce qu'**il comprend en outre un moyen (NAT, NAPT) de remplacement d'une adresse IP du dispositif d'agent personnel (HA) contenue dans un entête du paquet de données reçu par une adresse IP du noeud correspondant local spécial extrait des données reçues.

5. Un réseau de service d'accès selon l'une quelconque des revendications précédentes, **caractérisé en ce qu'**il comprend en outre une unité passerelle de couche d'application (SIP ALG) destinée à la configuration de l'acheminement de toutes les connexions IP relatives à la connexion de communication entre le dispositif d'équipement utilisateur (MS) et le noeud correspondant local spécial.

6. Un réseau de service d'accès selon l'une quelconque des revendications précédentes, **caractérisé en ce que** ledit routeur d'accès (AR) est configuré de façon à fournir au dispositif d'équipement utilisateur (MS) une adresse d'au moins un noeud correspondant local spécial après registration auprès du réseau de service d'accès.

7. Le système de communication de type IP mobile comprenant un réseau de service d'accès (ASN) selon l'une quelconque des revendications précédentes, **caractérisé en ce qu'**il comprend en outre une base de profils d'abonnés (AAA) qui est configurée de façon à fournir au routeur d'accès (AR) la liste de noeuds correspondants locaux spéciaux.

8. Un routeur d'accès (AR) destiné à une utilisation dans un système de communication de type IP mobile selon la revendication 7.

9. Un procédé d'acheminement de paquets de données de type IP mobile dans un système de communication fournissant un accès à un réseau public, plus particulièrement un accès sans fil et/ou un accès à l'Internet, pour au moins un dispositif d'équipement utilisateur mobile (MS) qui est situé dans la portée du réseau de service d'accès (ASN) d'un opérateur local, dans lequel une connexion de communication en tunnel destinée à l'acheminement d'un trafic classique vers un dispositif d'agent personnel (HA) d'un opérateur de rattachement est établie, le dispositif d'agent personnel (HA) étant configuré de façon à conserver en mémoire des informations d'abonnement relatives au dispositif d'équipement utilisateur (MS), **caractérisé en ce qu'**il comprend les étapes suivantes :
- la conservation en mémoire d'une liste de noeuds correspondants locaux spéciaux fournissant des services spéciaux dans un moyen de mémoire de données d'un routeur d'accès local du réseau d'accès local,
- l'extraction du noeud correspondant local spécial de données reçues du dispositif d'équipement utilisateur (MS), et
- le transfert direct des données reçues au noeud correspondant local spécial par l'intermédiaire d'une connexion directe si le noeud correspondant extrait correspond à une entrée dans la liste de noeuds correspondants locaux spéciaux, sans besoin de renvoyer des paquets vers le dispositif d'agent personnel (HA).
